# FASCICULE DE BREVET EUROPEEN

(11) **EP 2 760 707 B1**
(45) Date de publication et mention de la délivrance du brevet: **12.08.2015**
(21) Numéro de dépôt: 12775769.8
(22) Date de dépôt: 26.09.2012
(51) Int. Cl.: B60R 21/207

(54) **DISPOSITIF DE SÉCURITÉ À SAC GONFLABLE ET À DOUBLE SOLIDARISATION, POUR UN DOSSIER DE SIÈGE DE VÉHICULE**
AIRBAG SICHERHEITSVORRICHTUNG MIT ZWEI BEFESTIGUNGSMITTELN FÜR EINE FAHRZEUGSITZRÜCKENLEHNE
AIRBAG SAFETY DEVICE WITH TWO SECURING MEANS, FOR A VEHICLE SEAT BACKREST

(30) Priorité: 29.09.2011 FR 1158769
(43) Date de publication de la demande: 06.08.2014
(73) Titulaire: PSA Peugeot Citroen Automobiles S.A., 78140 Velizy Villacoublay (FR)
(72) Inventeur: FOMPERINE, Stephan, F-94440 Villecresnes (FR); RITHIE, Regis, F-92370 Chaville (FR)
(86) Numéro de dépôt international: PCT/FR2012/052165
(87) Numéro de publication internationale: WO 2013/045827

(56) Documents cités:
- FR-A1- 2 919 838

## Description

L'invention concerne les dispositifs de sécurité à sac gonflable (ou « airbag ») qui équipent certains sièges de véhicule (généralement de type automobile).

Comme le sait l'homme de l'art, certains sièges de véhicule comprennent sur l'une des parties latérales de leur dossier un premier dispositif de sécurité (à sac gonflable), généralement appelé par le terme anglais « airbag », et destiné à protéger le thorax d'un passager assis en cas d'accident ou de freinage violent. On notera que dans ce type de véhicule, un second dispositif de sécurité (à sac gonflable), différent du premier, est installé dans le véhicule, par exemple dans une zone du pavillon (ou toit) qui est située au-dessus du siège, afin de protéger la tête du passager assis en cas d'accident ou de freinage violent.

Ce premier dispositif de sécurité comprend, d'une part, un boîtier destiné à être logé dans un évidement de la garniture du dossier, logeant un sac gonflable et comprenant une face avant ouverte et une face arrière qui est opposée à sa face avant et destinée à être solidarisée à une armature située dans une partie latérale du dossier du siège, et, d'autre part, un couvercle qui masque la face avant du boîtier et est solidarisé soit à ce dernier, soit à l'armature.

On connaît par exemple par le document FR 2 919 838 A1 un tel dispositif de sécurité.

Afin d'optimiser la protection du thorax, il est préférable que le premier dispositif de sécurité soit placé aussi haut que possible sur une partie latérale du dossier. Par conséquent, il peut se retrouver placé au voisinage de l'actionneur qui permet l'accès aux places qui sont situées derrière son dossier. Dans ce cas, la partie supérieure du couvercle recouvre une partie inférieure de la paroi de l'actionneur qui est plaquée contre la face externe de la coiffe d'habillage (ou housse) du siège. Il en résulte que la partie supérieure du couvercle n'est pas dans le prolongement de la partie inférieure de la paroi de l'actionneur, ce qui peut induire un effet inesthétique (problème de finition) qui nuit à la qualité perçue.

Par ailleurs, l'utilisation d'un second dispositif de sécurité en complément du premier dispositif de sécurité augmente sensiblement les coûts.

L'invention a donc pour but d'améliorer la situation en proposant une solution qui, au moins, améliore sensiblement la qualité perçue.

Elle propose notamment à cet effet un dispositif de sécurité destiné à équiper un siège de véhicule et comprenant, d'une part, un boîtier, logeant un sac gonflable, comprenant une face avant ouverte et une face arrière, opposée à la face avant et propre à être solidarisée à une armature qui est située dans une partie latérale du dossier du siège, et, d'autre part, un couvercle solidarisé au boîtier dans une position qui masque sa face avant.

Ce dispositif de sécurité se caractérise par le fait que son couvercle comprend une face interne qui est munie dans une zone choisie de premiers moyens de solidarisation qui sont propres à coopérer avec des seconds moyens de solidarisation, définis sur une partie prédéfinie d'une paroi d'un actionneur qui est solidarisé à cette armature, de manière à solidariser le couvercle à cette paroi tout en masquant (par recouvrement) la partie prédéfinie de cette dernière.

Grâce à cette première solidarisation du couvercle à l'actionneur, non seulement la qualité perçue est meilleure, mais également la seconde solidarisation du dispositif de sécurité à l'armature est facilitée. En effet, le technicien n'ayant plus besoin de maintenir le dispositif de sécurité (du fait qu'il est solidarisé à l'actionneur), il peut désormais se servir de ses deux mains pour procéder à la seconde solidarisation.

Le dispositif de sécurité selon l'invention peut comporter d'autres caractéristiques qui peuvent être prises séparément ou en combinaison, et notamment :
- ses premiers moyens de solidarisation peuvent être choisis parmi au moins un moyen de clippage et un pion d'ancrage (lesquels permettent d'assurer un pré-maintien) ;
   ➢ la face interne du couvercle peut comprendre dans sa zone choisie deux moyens de clippage et un pion d'ancrage ;
- la zone choisie du couvercle peut être conformée de manière à être située sensiblement dans le prolongement d'une autre partie de la paroi qui est adjacente à la partie prédéfinie lorsque cette dernière est définie dans un renfoncement ;
- son boîtier peut loger un sac gonflable qui est destiné à protéger à la fois le thorax et la tête d'un passager assis sur le siège. Cela évite très avantageusement d'avoir à prévoir un autre dispositif de sécurité pour protéger la tête du passager ;
- la face arrière de son boîtier peut être couplée à au moins deux vis qui sont propres à traverser des trous correspondant définis dans l'armature.

L'invention propose également un siège destiné à équiper un véhicule et comprenant un dossier comportant une partie latérale comprenant une armature à laquelle est solidarisé un actionneur et un dispositif de sécurité du type de celui présenté ci-avant et solidarisé à l'armature et à l'actionneur.

L'invention propose également un véhicule, éventuellement de type automobile, et comprenant au moins un siège du type de celui présenté ci-avant.

D'autres caractéristiques et avantages de l'invention apparaîtront à l'examen de la description détaillée ci-après, et des dessins annexés, sur lesquels :
- la figure 1 illustre schématiquement, dans une vue de côté, un exemple de réalisation d'un siège de véhicule automobile équipé d'un exemple de réalisation d'un dispositif de sécurité selon l'invention et d'un actionneur, et
- la figure 2 illustre schématiquement, dans une vue en coupe selon l'axe II-II de la figure 1, une partie du dossier du siège de la figure 1 qui comprend le dispositif de sécurité et l'actionneur.

Les dessins annexés pourront non seulement servir à compléter l'invention, mais aussi contribuer à sa définition, le cas échéant.

L'invention a notamment pour but de proposer un dispositif de sécurité D (à sac gonflable SG) destiné à équiper une partie latérale PL d'un dossier DS de siège SI de véhicule.

Dans ce qui suit, on considère, à titre d'exemple non limitatif, que le véhicule est de type automobile. Il s'agit par exemple d'une voiture comportant deux rangs de siège(s). Mais, l'invention n'est pas limitée à ce type de véhicule. Elle concerne en effet tout type de véhicule comportant au moins un siège équipé d'un actionneur latéral AC destiné à permettre l'accès à l'espace qui est situé derrière ce siège. Par conséquent, l'invention concerne également les véhicules utilitaires, les camions et les cars (ou bus), par exemple.

Par ailleurs, on considère dans ce qui suit, à titre d'exemple non limitatif, que le siège fait partie du rang 1 du véhicule. Il s'agit par exemple du siège conducteur ou du siège passager avant. Mais, l'invention n'est pas limitée à ce type de siège. Elle concerne en effet tout siège de véhicule équipé d'un actionneur latéral du type précité. Par conséquent, l'invention concerne également les sièges faisant partie d'un rang intermédiaire, situé avant le dernier rang, voire les sièges faisant partie du dernier rang et comportant un actionneur latéral.

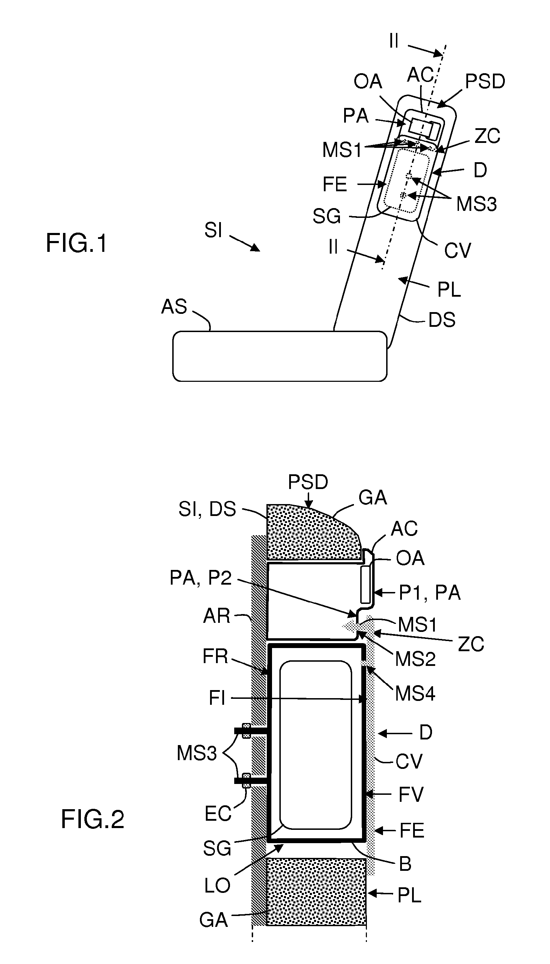

On a schématiquement représenté sur la figure 1 un exemple de réalisation d'un siège SI de véhicule (ici une voiture). Comme illustré, ce siège SI comprend une assise AS, pouvant être montée à coulissement sur des glissières fixées sur le plancher du véhicule, et au moins un dossier DS. On notera que dans l'exemple non limitatif qui est décrit ici, le siège SI ne comprend qu'un seul dossier DS. Mais, un siège selon l'invention peut comporter au moins deux dossiers lorsqu'il constitue une banquette.

Le dossier DS comprend deux parties latérales PL qui, pour l'une d'entre elles (préférentiellement celle située devant une portière du véhicule), comporte un actionneur latéral AC qui est destiné à permettre l'accès à l'espace qui est situé derrière le siège SI. Par exemple, cet actionneur latéral AC permet, lorsque l'on actionne son organe préhensible OA (ici monté à rotation), d'entraîner le dossier DS en rotation vers l'avant et/ou de translater le siège SI vers l'avant du véhicule. On notera que pour ne pas surcharger la figure 2 on n'a pas représenté le mécanisme qui est couplé à l'organe OA et au dispositif de contrôle du verrouillage de rotation du dossier DS et/ou au dispositif de contrôle du verrouillage de translation du siège SI.

De préférence, et comme illustré non limitativement sur les figures 1 et 2, l'actionneur latéral AC est installé dans la partie supérieure PSD du dossier DS, laquelle est opposée à l'assise AS. Mais, dans une variante de réalisation, cet actionneur latéral AC pourrait être installé dans une partie intermédiaire du dossier DS, située entre ses parties supérieure PSD et inférieure.

L'actionneur latéral AC est logé dans un logement LO qui est défini dans la garniture GA (par exemple en mousse synthétique) qui est solidarisée à une armature AR du dossier DS et recouverte sur une face externe d'une coiffe d'habillage (ou housse). Par ailleurs, cet actionneur latéral AC est ici solidarisé fixement à une partie (parfois appelée flasque) de l'armature AR qui est située dans la partie latérale PL concernée du dossier DS, mais dans des variantes il pourrait être fixé sur une platine ou sur un tube. Cette solidarisation peut se faire par tout moyen connu de l'homme de l'art. Ainsi, et bien que cela n'apparaisse pas sur les figures, elle peut, par exemple, se faire par « empiochage », clippage et vissage. Mais, elle pourrait se faire par empiochage et/ou clippage et/ou vissage ou bien par collage.

On notera que l'actionneur latéral AC comprend une paroi avant PA (opposée à l'armature AR) et sur laquelle est ici monté à rotation l'organe OA.

L'invention propose de solidariser un dispositif de sécurité D à sac gonflable (ou airbag) SG, d'une part, à l'armature AR, à côté de l'actionneur latéral AC, et, d'autre part, à ce dernier (AC).

Comme illustré sur les figures 1 et 2, un dispositif de sécurité D, selon l'invention, comprend au moins un boîtier B, un sac gonflable SG (et son mécanisme de gonflage), et un couvercle CV.

Le sac gonflable SG et son mécanisme de gonflage (non représenté) sont logés dans le boîtier B qui est lui-même logé dans le même logement LO que l'actionneur latéral AC.

Par ailleurs, ce boîtier B comprend une face avant FV, qui est ouverte vers l'extérieur afin de permettre la sortie et l'expansion du sac gonflable SG, et une face arrière FR, qui est opposée à sa face avant FV et définie par une paroi qui est destinée à être solidarisée, de préférence fixement, à l'armature AR à côté de l'actionneur latéral AC. Ce boîtier B est de préférence réalisé par moulage dans un matériau plastique ou synthétique rigide. Mais, il pourrait également être réalisé en métal (par exemple en aluminium ou en acier).

Cette solidarisation de la face arrière FR du boîtier B à l'armature AR peut se faire par tout moyen connu de l'homme de l'art. Ainsi, et comme illustré non limitativement sur les figures 1 et 2, elle peut, par exemple, se faire par vissage. Pour ce faire, on peut, comme illustré, utiliser au moins deux vis MS3 destinées à traverser des trous traversant (éventuellement filetés) définis dans l'armature AR et à recevoir des écrous EC en vue d'une immobilisation précise et étroite du boîtier B sur l'armature AR. Mais, cette solidarisation pourrait se faire par collage. On notera que les têtes de vis peuvent être solidarisées fixement à la paroi qui définit la face arrière FR du boîtier B.

On notera qu'il est particulièrement avantageux, selon un autre aspect de l'invention, que le sac gonflable SG soit destiné à protéger non seulement le thorax d'un passager assis sur le siège SI, mais également la tête de ce même passager. Cela permet de ne pas avoir à installer dans le véhicule un autre dispositif de sécurité à sac gonflable dédié à la protection de la tête du passager assis. Mais, dans une variante de réalisation, le sac gonflable SG pourrait être destiné à protéger exclusivement le thorax d'un passager assis.

On notera que cette double protection conférée par le sac gonflable SG impose que son volume soit notablement plus important que celui qu'il possède lorsqu'il ne doit protéger que le thorax. Par conséquent, le volume du boîtier B doit être plus important que celui qu'il possède lorsqu'il accueille un sac gonflable dédié au seul thorax. Cette augmentation du volume se fait essentiellement suivant la direction verticale, étant donné qu'elle ne peut pas se faire suivant les directions transversale et longitudinale du véhicule.

Le couvercle CV est solidarisé au boîtier B dans une position qui est destinée à masquer sa face avant ouverte FV. Cette solidarisation est réversible afin de permettre une désolidarisation (au moins partielle) en cas de gonflage du sac gonflable SG. Cette solidarisation peut se faire par tout moyen réversible connu de l'homme de l'art. Ainsi, elle peut se faire, par exemple, par clippage à l'aide de pattes de clippage MS4 (voir figure 2) destinées à coopérer avec des moyens de clippage correspondant (non représentés) définis sur des parois du boîtier B au voisinage immédiat de sa face avant FV ou sur toute la périphérie du boitier B.

Par ailleurs, selon l'invention le couvercle CV comprend une face interne FI, opposée à sa face externe FE (orientée vers une portière) et munie dans une zone choisie ZC de premiers moyens de solidarisation MS1 propres à coopérer avec des seconds moyens de solidarisation MS2 qui sont définis sur une partie prédéfinie P1 de la paroi avant PA de l'actionneur latéral AC. Cette coopération est destinée à permettre la solidarisation du couvercle CV à la paroi avant PA ainsi que le masquage de la partie prédéfinie P1 de cette paroi avant PA, par recouvrement.

Dans l'exemple non limitatif illustré sur les figures 1 et 2, l'actionneur latéral AC est installé dans la partie supérieure PSD du dossier DS, et donc le dispositif de sécurité D est installé juste en-dessous de lui. Par conséquent, la zone choisie ZC du couvercle CV est la partie d'extrémité supérieure de ce dernier (CV), et la partie prédéfinie P1 de la paroi avant PA de l'actionneur latéral AC est une partie inférieure qui est recouverte par la zone choisie ZC. On notera que dans une variante de réalisation dans laquelle l'actionneur latéral AC est installé dans une partie intermédiaire du dossier DS, le dispositif de sécurité D se retrouve installé juste au-dessus de lui (AC). Dans ce cas, la zone choisie ZC du couvercle CV est la partie d'extrémité inférieure de ce dernier (CV), et la partie prédéfinie P1 de la paroi avant PA de l'actionneur latéral AC est une partie supérieure qui est recouverte par la zone choisie ZC.

Les premiers MS1 et seconds MS2 moyens de solidarisation peuvent être agencés de n'importe quelle manière connue de l'homme de l'art dès lors qu'ils assurent une solidarisation (temporaire ou non). Ainsi, les premiers moyens de solidarisation MS1 peuvent comporter au moins un moyen de clippage, comme par exemple une patte de clippage ou un cran d'arrêt, et/ou au moins un pion d'ancrage, comme par exemple un pion ou une languette terminé(e) par une extrémité libre de plus grande largeur (éventuellement en forme de cône).

Dans l'exemple non limitatif illustré sur les figures 1 et 2, les premiers moyens de solidarisation MS1 comportent un pion d'ancrage, défini dans une position centrale et destiné à traverser un trou traversant défini dans la partie prédéfinie P1 de la paroi PA, et deux moyens de clippage définis de part et d'autre du pion d'ancrage (de préférence sensiblement symétriquement) et destinés à coopérer respectivement avec des seconds moyens de clippage (non représentés) définis sur la face externe de la partie prédéfinie P1 de la paroi PA. Dans des variantes de réalisation, on pourrait ne prévoir qu'au moins un pion d'ancrage ou bien qu'au moins un moyen de clippage.

Cette solidarisation du couvercle CV à l'actionneur latéral AC offre au moins trois avantages lorsqu'elle est effectuée avant que le boîtier B ne soit lui-même solidarisé à l'armature AR. Elle permet tout d'abord de placer le dispositif de sécurité D dans le logement LO dans une position qui assure le positionnement de ses vis MS3 devant les trous traversants MS2 de l'armature AR. Elle permet ensuite de retenir le dispositif de sécurité D dans sa position finale pendant la phase de vissage des écrous AC. On comprendra en effet que le technicien peut désormais utiliser ses deux mains pour le seul vissage. Elle permet également de plaquer étroitement la zone choisie ZC du couvercle CV contre la paroi PA de l'actionneur latéral AC et ainsi d'améliorer la qualité perçue.

On notera que cette qualité perçue peut être encore améliorée lorsque la partie prédéfinie P1 est située dans un renfoncement de la paroi PA qui est adjacent à une autre partie P2 de cette dernière (PA) qui est située juste au-dessus du niveau de la coiffe d'habillage, comme illustré non limitativement sur les figures 1 et 2. En effet, dans ce cas, la zone choisie ZC du couvercle CV peut être conformée de manière à être placée dans le renfoncement au-dessus de la partie prédéfinie P1, et donc elle se retrouve située sensiblement dans le prolongement de l'autre partie P2 de la paroi PA, ce qui produit un effet esthétique qui renforce la qualité perçue.

Le couvercle CV est de préférence réalisé par moulage dans un matériau plastique ou synthétique permettant d'assurer le déploiement du sac gonflable (lequel est favorisé par une gorge périphérique).

On notera que le dispositif de sécurité D peut être entièrement pré-assemblé avant qu'il n'arrive sur une chaîne de montage. Ainsi, un technicien peut le saisir, puis le solidariser à la paroi PA de l'actionneur latéral AC, puis le loger dans le logement LO à côté de l'actionneur latéral AC en faisant passer ses vis MS3 au travers des trous traversants de l'armature AR, puis immobiliser son boîtier B par rapport à l'armature AR en vissant les écrous EC sur ses vis MS3.

L'invention ne se limite pas aux modes de réalisation de dispositif de sécurité (à sac gonflable), de siège de véhicule, et de véhicule décrits ci-avant, seulement à titre d'exemple, mais elle englobe toutes les variantes que pourra envisager l'homme de l'art dans le cadre des revendications ci-après.

## Revendications

1. Dispositif de sécurité (D) pour un siège (SI) de véhicule, ledit dispositif (D) comprenant un boîtier (B), logeant un sac gonflable (SG), comprenant une face avant (FV) ouverte et une face arrière (FR), opposée à ladite face avant (FV) et propre à être solidarisée à une armature (AR) située dans une partie latérale (PL) d'un dossier (DS) dudit siège (SI), et un couvercle (CV) solidarisé audit boîtier (B) dans une position masquant sa face avant (FV), **caractérisé en ce que** ledit couvercle (CV) comprend une face interne (FI) munie dans une zone choisie (ZC) de premiers moyens de solidarisation (MS1) propres à coopérer avec des seconds moyens de solidarisation (MS2), définis sur une partie prédéfinie (P1) d'une paroi (PA) d'un actionneur (AC) solidarisé à ladite armature (AR), de manière à solidariser ledit couvercle (CV) à ladite paroi (PA) tout en masquant la partie prédéfinie (P1) de cette dernière (PA).

2. Dispositif selon la revendication 1, **caractérisé en ce que** lesdits premiers moyens de solidarisation (MS1) sont choisis dans un groupe comprenant au moins un moyen de clippage et un pion d'ancrage.

3. Dispositif selon la revendication 2, **caractérisé en ce que** ladite face interne (FI) comprend dans ladite zone choisie (ZC) deux moyens de clippage et un pion d'ancrage.

4. Dispositif selon l'une des revendications 1 à 3, **caractérisé en ce que** ladite zone choisie (ZC) est conformée de manière à être située sensiblement dans le prolongement d'une autre partie (P2) de ladite paroi (PA), adjacente à ladite partie prédéfinie (P1) lorsque cette dernière (P1) est définie dans un renfoncement.

5. Dispositif selon l'une des revendications 1 à 4, **caractérisé en ce que** ledit boîtier (B) loge un sac gonflable (SG) destiné à protéger à la fois le thorax et la tête d'un passager assis sur ledit siège (SI).

6. Dispositif selon l'une des revendications 1 à 5, **caractérisé en ce que** ladite face arrière (FR) est couplée à au moins deux vis propres à traverser des trous correspondant définis dans ladite armature (AR).

7. Siège (SI) pour un véhicule, ledit siège (SI) comprenant un dossier (DS) comportant une partie latérale (PL) comprenant une armature (AR) à laquelle est solidarisé un actionneur (AC), **caractérisé en ce qu'**il comprend en outre un dispositif de sécurité (D) selon l'une des revendications précédentes, solidarisé à ladite armature (AR) et audit actionneur (AC).

8. Véhicule, **caractérisé en ce qu'**il comprend au moins un siège (SI) selon la revendication 7.

9. Véhicule selon la revendication 8, **caractérisé en ce qu'**il est de type automobile.

## Patentansprüche

1. Sicherheitsvorrichtung (D) für einen Fahrzeugsitz (SI), wobei die besagte Vorrichtung (D) ein Gehäuse (B) umfasst, in dem ein Airbag (SG) untergebracht ist, eine offene Vorderseite (FV) und eine Rückseite (FR) umfassend, die gegenüber der besagten Vorderseite (FV) liegt, und sich dazu eignet, fest mit einer Armatur (AR) verbunden zu werden, die sich in einem seitlichen Abschnitt (PL) einer Rückenlehne (DS) des besagten Sitzes (SI) befindet, und einen Deckel (CV), der in einer Position fest mit dem besagten Gehäuse (B) verbunden ist, die seine Vorderseite (FV) abdeckt, **dadurch gekennzeichnet, dass** der besagte Deckel (CV) eine Innenseite (FI) umfasst, die in einem ausgewählten Bereich (ZC) mit ersten Verbindungsmitteln (MS1) versehen ist, die sich dazu eignen, mit zweiten Verbindungsmitteln (MS2) zusammenzuwirken, die auf einem vorbestimmten Abschnitt (P1) einer Wand (PA) eines Betätigungsgeräts (AC) ausgeführt sind, der fest mit der besagten Armatur (AR) verbunden ist, um den besagten Deckel (CV) fest mit der besagten Wand (PA) zu verbinden, und dabei den vorbestimmten Abschnitt (P1) von letzterer (PA) abzudecken.

2. Vorrichtung nach Anspruch 1, **dadurch gekennzeichnet, dass** die besagten ersten Verbindungsmittel (MS1) aus einer Gruppe ausgewählt werden, die zumindest ein Einrastmittel und einen Verankerungsstift umfasst.

3. Vorrichtung nach Anspruch 2, **dadurch gekennzeichnet, dass** die besagte Innenseite (FI) im besagten ausgewählten Bereich (ZC) zwei Einrastmittel und einen Verankerungsstift umfasst.

4. Vorrichtung nach einem der Ansprüche 1 bis 3, **dadurch gekennzeichnet, dass** der besagte ausgewählte Bereich (ZC) derart ausgeformt ist, dass er sich in etwa in der Verlängerung eines anderen Abschnitts (P2) der besagten Wand (PA) befindet, der an den besagten vorbestimmten Abschnitt (P1) angrenzt, wenn dieser letztere (P1) in einer Vertiefung definiert wird.

5. Vorrichtung nach einem der Ansprüche 1 bis 4, **dadurch gekennzeichnet, dass** das besagte Gehäuse (B) einen Airbag (SG) aufnimmt, der dazu bestimmt ist, sowohl den Brustkorb, als auch den Kopf eines Fahrgastes zu schützen, der auf dem besagten Sitz (SI) sitzt.

6. Vorrichtung nach einem der Ansprüche 1 bis 5, **dadurch gekennzeichnet, dass** die besagte Rückseite (FR) mit zumindest zwei Schrauben verbunden ist, die sich dazu eignen, durch entsprechende Löcher geführt zu werden, die in der besagten Armatur (AR) definiert sind.

7. Sitz (SI) für ein Fahrzeug, wobei der besagte Sitz (SI) eine Rückenlehne (DS) enthält, der einen seitlichen Abschnitt (PL) umfasst, der eine Armatur (AR) enthält, mit der ein Betätigungsgerät (AC) fest verbunden ist, **dadurch gekennzeichnet, dass** er darüber hinaus eine Sicherheitsvorrichtung (D) nach einem der vorherigen Ansprüche umfasst, die fest mit der besagten Armatur (AR) und mit dem besagten Betätigungsgerät (AC) verbunden ist.

8. Fahrzeug, **dadurch gekennzeichnet, dass** es zumindest einen Sitz (SI) nach Anspruch 7 umfasst.

9. Fahrzeug nach Anspruch 8, **dadurch gekennzeichnet, dass** es sich um den Typ eines Kraftfahrzeugs handelt.

## Claims

1. Safety device (D) for a vehicle seat (SI), said device (D) comprising a housing (B), housing an inflatable bag (SG), comprising an open front face (FV) and a rear face (FR), opposite to said front face (FV) and able to be secured to a frame (AR) situated in a lateral part (PL) of a backrest (DS) of said seat (SI), and a cover (CV) secured to said housing (V) in a position masking its front face (FV), **characterised in that** said cover (CV) comprises an internal face (FI) provided, in a chosen region (ZC), with first securing means (MS1) able to cooperate with second securing means (MS2), defined on a predefined part(P1) of a wall (PA) of an actuator (AC) secured to said frame (AR), so as to secure said cover (CV) to said wall (PA) while masking the predefined part (P1) of the latter (PA).

2. Device according to claim 1, **characterised in that** said first securing means (MS1) are chosen from a group comprising at least one snapping-on means and an anchoring pin.

3. Device according to claim 2, **characterised in that** said internal face (FI) comprises, in said chosen region (ZC), two snapping-on means and one anchoring pin.

4. Device according to one of claims 1 to 3, **characterised in that** said chosen region (ZC) is conformed so as to be situated substantially in line with another part (P2) of said wall (PA), adjacent to said predefined part (P1) when the latter (P1) is defined in a recess.

5. Device according to one of claims 1 to 4, **characterised in that** said housing (B) houses an inflatable bag (SG) intended to protect both the thorax and the head of a passenger sitting on said seat (SI).

6. Device according to one of claims 1 to 5, **characterised in that** said rear face (FR) is coupled to at least two screws able to pass through corresponding holes defined in said frame (AR).

7. Seat (SI) for a vehicle, said seat (SI) comprising a backrest (DS) comprising a lateral part (PL) comprising a frame (AR) to which an actuator (AC) is secured, **characterised in that** it further comprises a safety device (D) according to one of the preceding claims, secured to said frame (AR) and to said actuator (AC).

8. Vehicle, **characterised in that** it comprises at least one seat (SI) according to claim 7.

9. Vehicle according to claim 8, **characterised in that** it is of the automobile type.
